# EUROPEAN PATENT APPLICATION

(11) **EP 3 672 055 A1**
(43) Date of publication of application: **24.06.2020**
(21) Application number: 19218322.6
(22) Date of filing: 19.12.2019
(51) Int. Cl.: H02M 7/219, H02M 5/458, H02M 1/42, H02M 1/44, H02M 7/217, H02M 7/483, H02M 7/487, F25B 49/02, H02P 27/00

(54) **CONTROL DEVICE FOR A THREE-PHASE REFRIGERATING MACHINE AND THREE-PHASE REFRIGERATING MACHINE THAT INCLUDES IT**

(30) Priority: 20.12.2018 IT 201800020518
(71) Applicant: Carel Industries S.p.A., 35020 Brugine (PD) (IT)
(72) Inventor: MORANDIN, Mattia, 35020 Brugine (Padova) (IT)
(74) Representative: De Giorgi, Michele

(57) **Abstract**

The present invention relates to a control device (10) for a refrigerating machine (100) with a three-phase power supply which comprises an AC/DC converter (11) having an output (12) and configured to produce a voltage increase so as to make available a DC bus voltage Vdc at the output (12) of the AC/DC converter (11).

The AC/DC converter (11) has a topology with three-level output, so as to make available a first operating voltage V1dc and a second operating voltage V2dc whose sum is equal to the bus voltage Vdc.

## Description

### TECHNICAL SECTOR

The present invention relates to the sector of refrigerating machines and the control and operation thereof. In particular the present invention relates to a control device for the compressor and the fan members of a refrigerating machine.

### BACKGROUND ART

Nowadays, in the sector of refrigerating machines, it is known to provide a control device for the compressor which has the function of adjusting the working mode thereof depending on the refrigerating power required.

Usually, variable-speed electronic fans are also provided, these being able to perform forced convection heat transfer to the evaporator member and/or condenser of the refrigerating machine.

In particular when the refrigerating machine is connected to a three-phase power supply, these variable-speed electronic fans are provided with suitable power suppliers which have special filters for preventing the spread of disturbances in the power supply network.

As is known, variable-speed electronic fans with a three-phase power supply are devices which are more complex and costly than the variable-speed electronic fans with single-phase power supply in particular owing to the higher working voltage.

The use of the latter would therefore be preferred by the manufacturers of refrigerating machines, but their use necessarily requires a power supplier able to convert in a suitable manner the power supply from three-phase to single-phase.

This substantially undermines the cost-related and structural advantages of using single-phase variable-speed electronic fans.

### SUMMARY

In this situation there exists a widespread need to simplify and reduce the costs for the construction and operation of refrigerating machines with a three-phase power supply.

One possible solution examined by the Applicant is that of powering the said variable-speed electronic fans by means of the same compressor controller, connecting them to the DC bus upstream of the DC/AC inverter stage for operation of the compressor.

In this way the filtering stage of the variable-speed electronic fans and the compressor are in fact incorporated in the compressor controller.

However, even in this case it is required to use a DC/DC conversion stage in order to provide the variable-speed electronic fans with a DC power supply at 250-400 V.

The task of the present invention is therefore that of proposing a control device for a refrigerating machine with a three-phase power supply and a refrigerating machine with a three-phase power supply including said device, such as to allow simplification of a conventional refrigerating machine with a three-phase power supply.

In connection with this task, an object of the present invention is to provide a control device for a refrigerating machine with a three-phase power supply and a refrigerating machine with a three-phase power supply including said device, allowing the use of single-phase variable-speed electronic fans without DC/DC converters being needed to power them.

Furthermore, an object of the present invention is to propose a control device for a refrigerating machine with a three-phase power supply and a refrigerating machine with a three-phase power supply including said device, such that the refrigerating machine is independent of the voltage of the available network power supply, avoiding the need to provide dedicated machines for the different three-phase network voltages available in the various countries.

Studies carried put by the Applicant show that this problem may be solved and the said objects may be achieved by means of the realization of a control device for a refrigerating machine with a three-phase power supply and a refrigerating machine with a three-phase power supply including said device according to the attached independent claims.

Advantageous aspects of a control device for a refrigerating machine with a three-phase power supply and a refrigerating machine with a three-phase power supply including said device are indicated in the attached dependent claims.

Said claims, as filed, are incorporated herein for the purpose of specific reference.

### BRIEF DESCRIPTON OF THE DRAWINGS

Figure 1 shows a simplified diagram of a control device for a refrigerating machine with a three-phase power supply and a refrigerating machine with a three-phase power supply including said device, according to the present invention.
Figures 2 to 8 show possible examples of the topology of the AC/DC converter of the control device according to Figure 1.

### DETAILED DESCRIPTION

With particular reference to the attached figures, these show, by way of a nonlimiting example, features of a control device for a refrigerating machine with a three-phase power supply according to the present invention, which is denoted overall by the reference number 10.

According to one feature of the present invention, the control device 10 may comprise an AC/DC converter 11 which is configured to produce a voltage increase and/or provide control for power factor correction (PFC) of the line current.

The control device 10 may be configured to provide a DC bus voltage Vdc at the output 12 of the AC/DC converter 11 and may have a topology with three-level output so to provide at the output 12 also a first operating voltage V1dc and a second operating voltage V2dc whose sum is equal to the bus voltage Vdc.

In this way it is possible to provide the DC bus with a voltage for example of 500-800 V and at the same time connect variable-speed DC electronic fans operating at 250-400 to the output 12 so as to supply them respectively at the first operating voltage V1dc and at the second operating voltage V2dc.

In this respect the AC/DC converter 11 may be configured so that the operating voltages V1dc and V2dc have the same value and preferably a value equal to 250V or 400V.

Thus independent voltage converters will not be required to supply power to the variable-speed electronic fans since the voltage available at the output 12 of the converter will be already at the appropriate level, even though a higher voltage for supplying the compressor is available.

The bus voltage will be preferably not higher than 800 V.

Moreover, the AC/DC converter 11 may be configured to perform a power factor correction (PFC) of the loads connected to it.

The control device 10, and specifically the AC/DC converter 11, will therefore act as an integrated PFC device both for the variable-speed electronic fans and for the compressor, allowing the control structure to be simplified greatly compared to that of a conventional refrigerating machine.

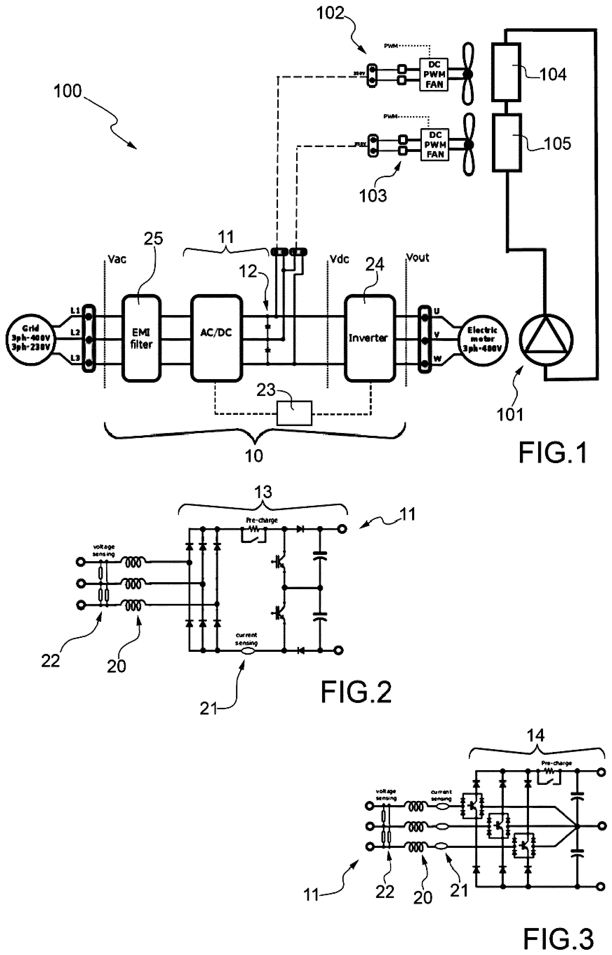

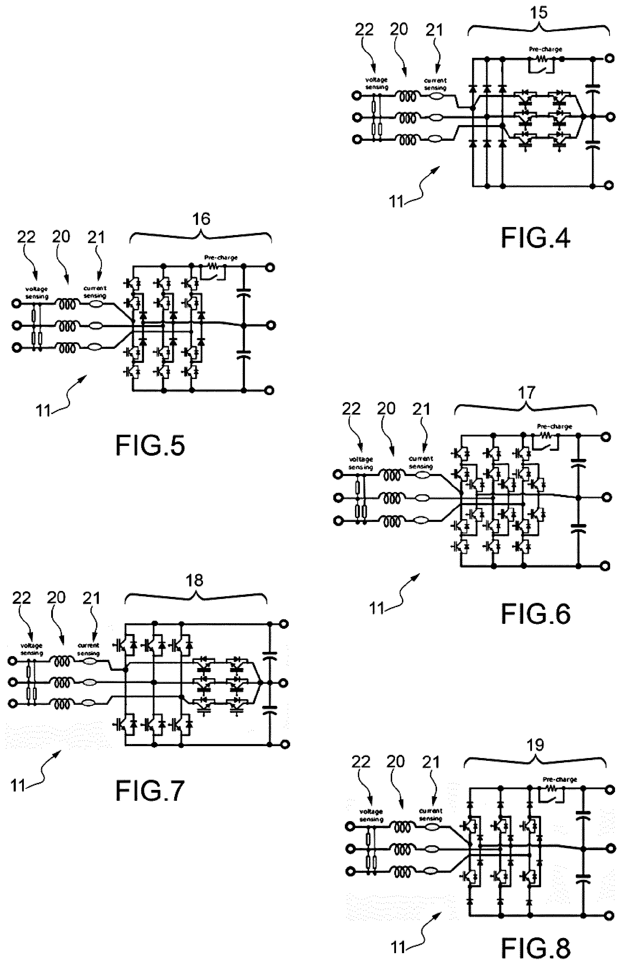

In detail, the AC/DC converter 11 may comprise an operating stage having a topology with three-level output chosen from:
- GARL topology 13, as for example shown in Figure 2;
- type A Vienna rectifier topology 14, as for example shown in Figure 3;
- type B Vienna rectifier topology 15, as for example shown in Figure 4;
- three-level NPC inverter topology 16, as for example shown in Figure 5;
- type A three-level active-NPC inverter topology 17, as for example shown in Figure 6;
- type B three-level MNPC inverter topology 18, as for example shown in Figure 7;
- three-level PFC topology 19, as for example shown in Figure 8;

In greater detail, with particular reference to Figure 2, GARL topology is understood as being a topology which has at its input a three-phase rectifier bridge of the 6-diode conventional type and also has on the rectified side two series switches connected to identical-value capacitances by means of two diodes, the centre of the two switches being connected to the mid-point of the DC bus.

With particular reference to Figure 3, "type A Vienna rectifier topology" is understood as meaning a topology which has the same number of diodes as a 6-diode conventional three-phase rectifier bridge, where the supply phases and the centre of the DC bus are connected by means of a four-terminal block composed of a switch (for example an IGBT) and four diodes.

With reference to Figure 4, in a type B three-level Vienna rectifier topology this has the same number of diodes as a 6-diode conventional three-phase rectifier bridge, where there is a two-way switch (which may be represented by two anti-parallel IGBTs) which connects the input phase to the mid-point of the DC voltage bus realized by means of two capacitors with the same value.

With reference to Figure 5, a three-level NPC (Neutral Point Clamped) branch has twice the number of switches compared to a conventional two-level inverter, with two anti-parallel diodes and switches per branch, there also being provided two further diodes, called "clamping diodes" which are connected to the mid-point of two high switches and two low switches and to the mid-point of the DC voltage bus formed by means of two capacitors with the same value.

With reference to Figure 6, a three-level active NPC (Neutral Point Clamped) branch has twice the number of switches compared to a conventional two-level inverter, with two anti-parallel diodes and switches per branch, there also being provided two further switches, called "clamping switches" which are connected to the mid-point of two high switches and two low switches and to the mid-point of the DC voltage bus which is formed by means of two capacitors with the same value.

With reference to Figure 7, in the three-level MNPC (Mixed Voltage Neutral Point Clamped) branch there are the same number of switches as in a two-level three-phase inverter of the conventional type with two switches having anti-parallel diodes per branch, there also being provided a two-way switch which may be represented by two anti-parallel IGBTs which connect the input phase to the mid-point of the DC voltage bus which is formed by means of two capacitors with the same value.

In the branch of a three-level PFC, as shown by way of example in Figure 8, there are, connected in series, a diode, a switch, a switch and a diode. as well as a diode connected between diode and switch and to the mid-point of the DC voltage bus formed by means of two capacitors with the same value.

The AC/DC converter 11 may also comprise, for example upstream of the operating stage with three-level output topology, at least one of the following stages:
- an inductive filtering stage (20);
- a first detection stage 21 for detecting phase-current signals, which may be downstream of any filtering stage 20;
- a second detection stage 22 for detecting phase-to-phase voltages, which may be upstream of any filtering stage 20.

The control device 10 may comprise a controller 23 connected to the first detection stage 21, if present, and to the second detection stage 22, if present, and to the AC/DC converter in order to operate it.

The control device 10, in a manner known per se, may also comprise:
- an inverter stage 24 connected to the output 12 of the AC/DC converter 11 and adapted to be connected to a refrigerating machine compressor.
- an EMI (electromagnetic interference) filtering stage 25 connected upstream of the AC/DC converter.

The inverter stage 24 may be connected to the controller 23 in order to operated so as to vary the working mode of the compressor.

The present invention also relates to a refrigerating machine 100 comprising a compressor 101, a first fan 102, a second fan 103 and the control device 10.

The compressor 101 may be connected to the control device 10 so as to be powered at a variable speed.

The first fan 102 may be connected to the output 12 of the AC/DC converter 11 so as to be supplied at the first operating voltage V1dc and the second fan 103 may be connected to the output 12 of the AC/DC converter 11 so as to be supplied at the second operating voltage V2dc.

The variable-speed electronic fans 102 and 103 will be associated with heat exchangers 104, 105 of the refrigerating machine 100 in a conventional manner not illustrated and described in the present document.

The variable-speed electronic fans 102 and 103 may each have a PWM DC control connected to the output 12 of the AC/DC converter 11 for operation thereof at a variable speed depending on the particular heat exchange requirement of the said heat exchangers.

It can therefore be understood how a control device 10 and a refrigerating machine 100, according to the present invention, fulfil the task and achieve the objects proposed.

In fact, a control device for a refrigerating machine with a three-phase power supply and a refrigerating machine with a three-phase power supply including said device allow the structure of the machine to be simplified compared to a conventional refrigerating machine with a three-phase power supply, in particular allowing single-phase variable-speed electronic fans to be used without the need to provide DC/DC converters for powering them, since they are each powered at half the power supply of the DC bus of the control device.

With a control device for a refrigerating machine with a three-phase power supply and a refrigerating machine with a three-phase power supply including said device, according to the present invention, it is possible to ensure that the refrigerating machine is independent of the voltage of the available network power supply and avoid having to provide dedicated machines for the different three-phase network voltages available in the various countries.

The Italian patent application 102018000020518, the priority of which is claimed by the present patent application, is incorporated herein for the purpose of specific reference.

## Claims

1. Control device (10) for a refrigerating machine (100) with a three-phase power supply which comprises an AC/DC converter (11) having an output (12) and configured to produce a voltage increase so as to make available a DC bus voltage Vdc at the output of (12) of said AC/DC converter (11) wherein said AC/DC converter (11) has a topology with a three-level output (12) for making available at said output (12) a first operating voltage V1dc and a second operating voltage V2dc whose sum is equal to the bus voltage Vdc;
wherein said AC/DC converter (11) comprises an operating stage having a topology with three-level output chosen from:
- type A Vienna rectifier topology (14);
- type B Vienna rectifier topology (15);
- type A three-level active-NPC inverter topology (17);
- type B three-level MNPC inverter topology (18);
- three-level PFC topology (19).

2. Control device (10) according to claim 1, wherein said AC/DC converter (11) is configured so that said operating voltages V1dc and V2dc are of equal value.

3. Control device (10) according to one of the preceding claims, wherein said bus voltage is not higher than 800 V.

4. Control device (10) according to one of the preceding claims, wherein said AC/DC converter (11) is configured to carry out a power factor correction (PFC) of the loads connected to it.

5. Control device (10) according to claim 4, wherein said AC/DC converter (11) comprises, upstream of said operating stage:
- an inductive filtering stage (20) and/or
- a first detection stage (21) for detecting current signals and/or
- a second detection stage (22) for detecting phase-to-phase voltages.

6. Control device (10) according to one of the preceding claims which comprises an inverter stage (24) connected to the output (12) of said AC/DC converter and adapted to be connected to a compressor (101) of a refrigerating machine (100).

7. Control device (10) according to one of the preceding claims, which comprises an EMI filtering stage (25), for electromagnetic interference.

8. Refrigerating machine (100) comprising a compressor (101), a first variable-speed electronic fan (102), a second variable-speed electronic fan (103) and a control device (10) with a three-phase power supply which comprises an AC/DC converter (11) having an output (12) and configured to produce a voltage increase so as to make available, at the output (12) of said AC/DC converter (11), a DC bus voltage Vdc;
wherein said AC/DC converter (11) has a topology with three-level output, so as to make available at said output (12) a first operating voltage V1dc and a second operating voltage V2dc whose sum is equal to the bus voltage Vdc;
wherein said compressor (101) is connected to said control device (10) for being supplied by it; said first fan (102) being connected to the output (12) of said AC/DC converter (11) so as to be supplied at said first operating voltage V1dc and said second fan (103) being connected to the output (12) of said AC/DC converter (11) so as to be supplied at said second operating voltage V2dc.

9. Refrigerating machine (100) according to claim 8, wherein each of said variable-speed electronic fans (102, 103) has a PWM DC control connected to the output (12) of said AC/DC converter (11) for driving said variable-speed electronic fans (102, 103) at a variable speed.

10. Refrigerating machine (100) according to one of claims 8 and 9, wherein said AC/DC converter (11) is configured so that said operating voltages V1dc and V2dc are of equal value, said bus voltage being preferably not higher than 800 V.

11. Refrigerating machine (100) according to one of claims 8-10, wherein said AC/DC converter (11) is configured to carry out a power factor correction (PFC) of the loads connected to it.

12. Refrigerating machine (100) according to one of claims 8-11, wherein said AC/DC converter (11) comprises an operating stage having a topology with three-level output chosen from:
- GARL topology (13);
- type A Vienna rectifier topology (14);
- type B Vienna rectifier topology (15);
- three-level active NPC inverter topology (16);
- type A three-level NPC inverter topology (17);
- type B three-level MNPC inverter topology (18);
- three-level PFC topology (19).

13. Refrigerating machine (100) according to claim 12, wherein said AC/DC converter (11) comprises, upstream of said operating stage:
- an inductive filtering stage (20) and/or
- a first detection stage (21) for detecting current signals and/or
- a second detection stage (22) for detecting phase-to-phase voltages.

14. Refrigerating machine (100) according to one of claims 8-13, which comprises an inverter stage (24) connected to the output (12) of said AC/DC converter (11) and adapted to be connected to a compressor (101) of a refrigerating machine (100).

15. Control device (10) according to one of claims 8-14, which comprises an EMI filtering stage (25), for electromagnetic interference.
